# FASCICULE DE BREVET EUROPEEN

(11) **EP 3 282 096 B1**
(45) Date de publication et mention de la délivrance du brevet: **13.03.2019**
(21) Numéro de dépôt: 17180944.5
(22) Date de dépôt: 12.07.2017
(51) Int. Cl.: F01D 17/16, F04D 29/56, F01D 9/04

(54) **AUBE À ORIENTATION VARIABLE DE COMPRESSEUR DE TURBOMACHINE AXIALE**
LEITSCHAUFEL MIT VARIABLER ORIENTIERUNG EINES KOMPRESSORS EINER AXIALEN STRÖMUNGSMASCHINE
VARIABLE ORIENTATION VANE FOR COMPRESSOR OF AXIAL TURBOMACHINE

(30) Priorité: 12.08.2016 BE 201605635
(43) Date de publication de la demande: 14.02.2018
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- EP-A2- 0 527 593
- WO-A1-2014/205816
- GB-A- 2 294 094
- US-A1- 2014 147 278
- US-A1- 2014 286 745
- US-A1- 2016 138 415

## Description

### Domaine technique

L'invention se rapporte aux aubes à calage variable. L'invention concerne la réduction des jeux mécaniques dans un système d'aubes à calage variable. L'invention a également trait à une turbomachine axiale, notamment un turboréacteur d'avion ou un turbopropulseur d'aéronef, munie d'aubes à calage variable.

### Technique antérieure

Il est connu de prévoir plusieurs rangées d'aubes orientables par rapport au carter d'un compresseur de turboréacteur. De telles aubes peuvent être pivotées pendant le fonctionnement du moteur. Leurs pales cambrées basculent par rapport au flux primaire qu'elles traversent, ce qui permet d'adapter leur action en fonction du régime moteur et des conditions de vol. La plage de fonctionnement est ainsi étendue.

Ces aubes sont dotées de tiges de commandes montées pivotants dans des ouvertures traversant le carter externe du compresseur. Les extrémités libres des tiges de commandes sont prolongées latéralement par des leviers de commandes, eux-mêmes reliées à une bague de commande. Des actionneurs permettent d'entraîner en rotation les bagues pour incliner les leviers, et ainsi orienter les aubes. Le pilotage des actionneurs peut s'effectuer en fonction de capteurs, ou de différents paramètres de fonctionnement de la turbomachine. La performance du compresseur repose sur la précision de positionnement angulaire des aubes par rapport au carter. A cet effet, l'accouplement entre la tige de commande et le levier d'une aube doit être précis en plus de devoir supporter des couples importants. Le réglage au montage de l'orientation entre l'axe de commande et le levier doit être particulièrement fin.

Le document US2010/0166540 A1 divulgue une turbomachine pour aéronef munie d'une section de compresseur. La section de compression comprend plusieurs aubes rotoriques et plusieurs aubes statoriques placées en amont des aubes rotoriques. La section de compression comporte une géométrie variable grâce à la présence d'aubes de stator pivotantes, ce qui permet de modifier la pression et la vitesse du fluide fourni aux aubes rotoriques. Les aubes pivotantes comprennent chacune un tourillon prolongé par un levier de commande. Ces leviers de commande sont liés à une bague d'actionnement commune, ce qui permet de piloter l'ensemble de la rangée d'aubes pivotantes par simple rotation de la bague d'actionnement. En outre, chaque levier présente une forme de pince en prise avec l'aube associée, ce qui limite les jeux mécaniques nuisant à la précision de commande. Toutefois, des jeux mécaniques subsistent au niveau de la bague de commande. Par ailleurs, la rotation de cette dernières génère une flexion des leviers, et donc des contraintes internes dans les leviers.

Le document WO2014/205816A1 divulgue un système de commande d'aubes à calage variable pour turbomachine. Des sources de champ magnétiques actionnent les aubes selon différentes orientations.

### Résumé de l'invention

### Problème technique

L'invention a pour objectif de résoudre au moins un des problèmes posés par l'art antérieur. Plus précisément, l'invention a pour objectif d'améliorer la précision de commande d'une aube à calage variable. L'invention a également pour objectif de proposer un système de commande d'aubes à calage variable réduisant les jeux tout en limitant les contraintes internes. L'invention a également pour objectif de proposer une solution simple, résistante, légère, économique, fiable, facile à produire, commode d'entretien, d'inspection aisée, et améliorant le rendement.

### Solution technique

L'invention a pour objet un système de commande d'aube à orientation variable de turbomachine, le système comprenant : un support ; une aube qui est mobile en rotation par rapport au support et qui comprend un levier de commande de l'orientation de l'aube ; remarquable en ce qu'il comprend en outre un actionneur avec une source de champ magnétique qui définit un entrefer avec le levier de sorte à pouvoir entraîner en rotation ledit levier.

Selon un mode avantageux de l'invention, la source de champ magnétique comprend une bobine et éventuellement un noyau ferromagnétique à l'intérieur de la bobine.

Selon un mode avantageux de l'invention, le levier comprend une portion en matériau ferromagnétique coopérant avec la source de champ magnétique. Selon un mode avantageux de l'invention, le levier comprend une surépaisseur coopérant avec la source de champ magnétique.

Selon un mode avantageux de l'invention, la surépaisseur est une surépaisseur radiale du levier.

Selon un mode avantageux de l'invention, l'aube comprend une corde, la longueur L du levier étant supérieure ou égale à la moitié de ladite corde. Selon un mode avantageux de l'invention, la source de champ magnétique est disposée dans le plan de rotation du levier.

Selon un mode avantageux de l'invention, le système comprend un élément élastique configuré pour écarter le levier de la source de champ magnétique. Selon un mode avantageux de l'invention, le système est adapté pour alimenter électriquement la source de champ magnétique de manière à déplacer progressivement le levier, notamment en s'opposant à l'effort exercé par l' élément élastique.

Selon un mode avantageux de l'invention, le support comprend une butée, l' aube étant mobile en rotation entre une première position contre la butée, et une deuxième position contre la source de champ magnétique, l'entrefer étant éventuellement fermé lorsque l'aube est dans la deuxième position.

Selon un mode avantageux de l'invention, l'aube comprend une pale destinée à s'étendre radialement dans un flux de la turbomachine depuis le support, le support séparant la pale de la source de champ magnétique.

Selon un mode avantageux de l'invention, le système comprend un capteur d' orientation de l'aube, la source de champ magnétique étant asservie en fonction de l'orientation mesurée par le capteur.

Selon un mode avantageux de l'invention, l'aube est une première aube, le levier est un premier levier, l'entrefer est un premier entrefer ; le système comprenant en outre une deuxième aube qui est mobile en rotation par rapport au support et qui comprend un deuxième levier de commande de l'orientation de la deuxième aube ; la source de champ magnétique définissant un deuxième entrefer avec le deuxième levier de sorte à entraîner en rotation ledit deuxième levier.

Selon un mode avantageux de l'invention, la première aube comprend un premier axe de rotation, la deuxième aube comprend un deuxième axe de rotation, la source de champ magnétique étant disposée dans un plan généré par lesdits axes de rotation.

Selon un mode avantageux de l'invention, le système comprend au moins une rangée annulaire d'aubes à orientation variable ; la première aube et la deuxième aube appartenant à ladite rangée annulaire.

Selon un mode avantageux de l'invention, le système comprend au moins deux rangées annulaires d'aubes à orientation variable ; la première aube appartenant à l'une des deux rangées annulaires d'aubes et la deuxième aube appartenant à l'autre des deux rangées annulaires d'aubes.

Selon un mode avantageux de l'invention, la source de champ magnétique est disposée axialement et/ou circonférentiellement entre la première aube et la deuxième aube.

Selon un mode avantageux de l'invention, le système de commande est configuré de sorte à pouvoir tourner la ou chaque aube d'un angle supérieur ou égal à 5°, ou à 10°, ou à 20°, ou à 30°.

Selon un mode avantageux de l'invention, la ou chaque source de champ magnétique est disposée au niveau radialement du levier associé.

Selon un mode avantageux de l'invention, la ou chaque source de champ magnétique est un électroaimant et/ou la source de champ magnétique entraîne le levier associé par induction électromagnétique.

Selon un mode avantageux de l'invention, l'aube comprend une tige de commande traversant le support, ladite tige étant montée pivotante par rapport au support.

Selon un mode avantageux de l'invention, la première aube et la deuxième aube forment une paire d'aubes, la rangée est constituée de paires identiques d'aubes, ou les aubes d'une des deux rangées sont identiques à la première aube, et les aubes de l'autre des deux rangées sont identiques à la deuxième aube.

Selon un mode avantageux de l'invention, chaque rangée d'aubes est formée d'aubes identiques ou de paires identiques d'aubes.

Selon un mode avantageux de l'invention, la longueur L du levier est supérieure ou égale à la moitié de l'écartement entre deux aubes voisines d'une même rangée et/ou de deux rangées orientables successives.

Selon un mode avantageux de l'invention, le système comprend un aimant permanent configuré pour écarter le ou chaque levier associé de la source de champ magnétique; ledit aimant permanent formant éventuellement une butée pour l'aube associée ou pour chaque aube associée.

L'invention a également pour objet un système de commande d'aube(s) à orientation variable de turbomachine, le système comprenant : un support, notamment un carter annulaire ; une aube qui est mobile en rotation par rapport au support et qui comprend un levier de commande de l'orientation de l'aube ; remarquable en ce qu'il comprend en outre une source de champ magnétique disposée dans la trajectoire du levier et/ou dans l'espace balayé par le levier de sorte à entraîner en rotation ledit levier, notamment directement.

Selon un mode avantageux de l'invention, le ou chaque levier est droit ou coudé; et éventuellement monobloc.

L'invention a également pour objet une turbomachine, comprenant un système de commande d'aube à orientation variable, remarquable en ce que le système est conforme à l'invention, préférentiellement la turbomachine comprend un compresseur basse pression dans lequel est installé ledit système.

Selon un mode avantageux de l'invention, la turbomachine comprend un rotor avec au moins une rangée annulaire d'aubes rotoriques disposée axialement au niveau de la ou d'au moins une source de champ magnétique.

Selon un mode avantageux de l'invention, la turbomachine est un turboréacteur ou un turbopropulseur d'aéronef, le système étant configuré de sorte à alimenter électriquement la ou chaque source de champ magnétique au décollage de l'aéronef.

L'invention a également pour objet un procédé de contrôle d'une turbomachine, remarquable en ce que la turbomachine est conforme à l'invention, et en ce qu'elle est un turboréacteur ou un turbopropulseur d'aéronef, le procédé comprenant une étape (a) stationnement au sol de l'aéronef, et une étape (b) décollage de l'aéronef ; le système de commande étant configuré de sorte à alimenter électriquement la ou chaque source de champ magnétique lors de l'étape (b) décollage de l'aéronef.

Selon un mode avantageux de l'invention, à l'étape (a) stationnement, le système de commande est configuré de sorte à couper l'alimentation électrique de la ou chaque source de champ magnétique.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Avantages apportés

L'invention permet un actionnement précis des aubes orientables. Elle réduit le nombre d'interface mobiles, ce qui prolonge la durée de vie du système malgré les vibrations et la température de la turbomachine. Les positions extrêmes de chaque aube orientable sont davantage respectées. En effet, chaque source de champ forme une face de butée que l'aube atteint dans sa deuxième position. Cette précision est atteinte d'une manière simple et économique.

L'invention permet également un partage des sources de champs magnétiques. Cette synergie réduit la masse, et permet une économie. La combinaison de ressorts et de sources magnétiques permet de régler progressivement l'orientation des aubes en alimentant progressivement les bobines. Par ce biais, chaque aube orientable peut occuper une pluralité de positions intermédiaires.

### Brève description des dessins

La figure 1 représente une turbomachine axiale selon l'invention.
La figure 2 est un schéma d'un compresseur de turbomachine selon l'invention.
La figure 3 illustre un système de commande selon un premier mode de réalisation de l'invention.
La figure 4 illustre un système de commande selon un deuxième mode de réalisation de l'invention.
La figure 5 illustre un système de commande selon un troisième mode de réalisation de l'invention.
La figure 6 illustre un système de commande selon un quatrième mode de réalisation de l'invention.
La figure 7 est un diagramme d'un procédé de contrôle d'une turbomachine équipée d'un système de commande selon l'invention.

### Description des modes de réalisation

Dans la description qui va suivre, les termes interne et externe renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

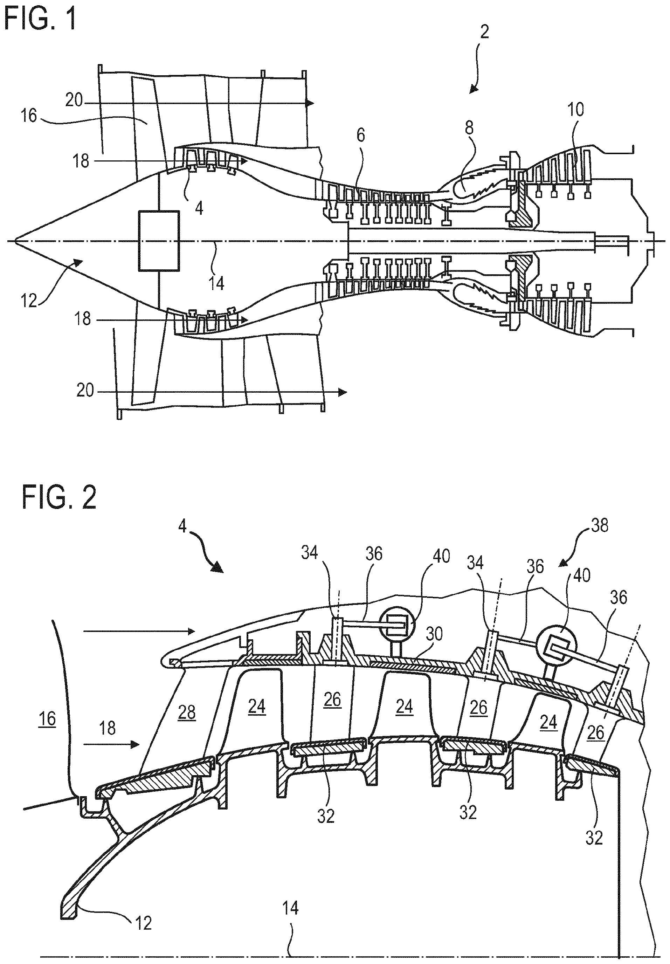

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan, ou soufflante, 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) en générant une poussée utile à la propulsion d'un avion.

La figure 2 est une vue en coupe d'un compresseur d'une turbomachine axiale telle que celle de la figure 1. Le compresseur peut être un compresseur basse-pression 4.

Le rotor 12 comprend plusieurs rangées d'aubes rotoriques 24, en l'occurrence trois. L'inclinaison des cordes des aubes rotoriques 24 reste invariante par rapport à l'axe de rotation 14. Le compresseur basse pression 4 comprend plusieurs redresseurs, en l'occurrence quatre, qui contiennent chacun une rangée d'aubes statoriques (26 ; 28), en ce sens qu'elles sont liées au stator. Les redresseurs sont associés au fan 16 ou à une rangée d'aubes rotoriques pour redresser leurs flux d'air, de sorte à convertir la vitesse du flux en pression statique. Chaque aube, rotorique comme statorique, présente un bord d'attaque, un bord de fuite, une surface intrados et une surface extrados ; lesdites surfaces reliant le bord d'attaque au bord de fuite ; tout comme les cordes de l'aube. Dans la description qui suit, on peut se référer à une corde médiane. La surface intrados et la surface extrados délimitent la pale de l'aube correspondante.

Les aubes statoriques (26 ; 28) s'étendent essentiellement radialement depuis un carter extérieur 30. Les aubes statoriques (26 ; 28) comprennent des aubes d'entrée 28 à orientation fixe, et des aubes aval 26 à orientation réglable. Ces aubes 26 sont également connues comme aubes à calage variable, ou selon l'acronyme anglo-saxon « VSV » pour « Variable Stator Vane ». Leur particularité est que l'inclinaison de leurs cordes peut varier par rapport à l'axe de rotation 14 du compresseur 4. Leurs faces intrados et extrados peuvent être plus ou moins exposées au flux primaire 18. Les aubes orientables 26 d'une même rangée peuvent être identiques. En l'occurrence, on identifie ici trois rangées d'aubes orientables 26. Toutefois il serait possible d'implanter davantage de rangées, par exemple en rendant orientable les aubes d'entrée.

Ou encore, le compresseur pourrait ne comprendre qu'une seule rangée orientable.

Les aubes orientables 26 peuvent pivoter par rapport au flux 18, si bien qu'elles couvrent plus ou moins la veine fluide grâce à leurs pales. Elles peuvent intercepter davantage le flux primaire 18. La largeur circonférentielle qu'elles occupent peut varier. Leurs bords d'attaque et leur bords de fuite peuvent se rapprocher ou s'éloigner des aubes de la même rangée. En étant plus ou moins inclinées par rapport au sens d'écoulement général, elles dévient plus ou moins le flux primaire 18 pour moduler le redressement de flux qu'elles procurent. Ainsi, la turbomachine et le compresseur peuvent suivre différentes courbes de rendements lors du fonctionnement.

Le compresseur 4 peut comprendre des viroles internes 32 suspendues aux extrémités internes des aubes orientables 26. Afin de permettre la rotation de ces dernières, celles-ci présentent des extrémités avec des liaisons pivot ou rotule (non représentées). Ainsi les aubes orientables 26 sont également inclinables par rapport aux viroles internes 32.

Les aubes orientables 26 supportées par le carter 30 via des tiges de commande 34 formant des liaisons tournantes. Des leviers 36 aux sommets des tiges 34 permettent de communiquer une rotation aux aubes orientables 26. Les orientations angulaires des aubes orientables 26 sont pilotées par un système de commande 38 coopérant avec les leviers 36.

Le système de commande 38 comprend au moins une source de champ magnétique 40, éventuellement plusieurs sources de champ magnétique 40 formant des actionneurs mécaniques. Chaque source 40 peut être fixée sur la surface externe du carter 30, ce qui réduit l'encombrement. Le système de commande 38 peut comprendre une source de champ magnétique 40 par aube orientable, ou une source de champ magnétique 40 pour deux aubes orientables 26. Chaque source 40 agit de manière magnétique sur un ou plusieurs leviers 36 en l'attirant ou le repoussant. Ce déplacement implique une rotation du levier 36 en question, et donc un changement d'orientation angulaire de l'aube orientable 26 correspondante.

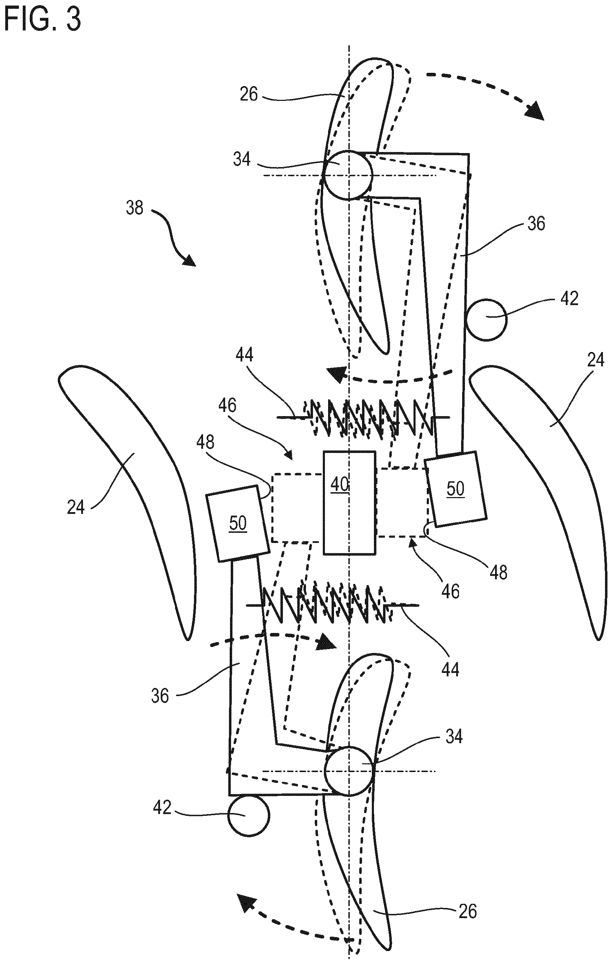

La figure 3 esquisse une partie du système de commande 38 de la figure 2. Une rangée d'aubes rotoriques 24 est matérialisée par deux aubes 24. Le carter n'est pas représenté par soucis de clarté. Seules deux rangées d'aubes orientables 26 sont représentées par soucis de clarté. Le fonctionnement de la rangée non représentée peut aisément être déduit de ce qui suit.

Les aubes orientables 26 sont chacune mobile en rotation entre une première position dite de repos (tracée en trait plein), et une deuxième position dite position active (tracée en trait pointillée). Elles pivotent sur elles-mêmes grâce à leur tiges de commande 34. Dans la première position, les aubes orientables 26 peuvent être contre des butées angulaires 42, par exemples formées sur le carter. Elles peuvent y être maintenues grâce à des éléments élastiques 44, tels des ressorts, si bien qu'elles peuvent être auto-stables.

Les leviers 36 peuvent être généralement parallèles aux cordes des aubes orientables 26. Dans la première position, les leviers 36 ménagent des entrefers 46 avec la source 40. En particulier, les leviers 36 présentent des faces 48 en regard de la source 40, lesdites faces 48 délimitant les entrefers 46. Ces faces 48 peuvent être formées sur des surépaisseurs 50 des leviers 36. Les surépaisseurs 50 augmentent les surfaces utiles des entrefers 46, ce qui accroit l'efficacité du système. Lorsque la source 40 est alimentée électriquement, le champ magnétique produit dans les entrefers 46 attire les leviers 36, si bien que les entrefers 36 se referment, et les faces 48 viennent en contact et donc en butée contre la source 40. Les aubes orientables 26 viennent donc en butée contre leurs sources 40.

Chaque source de champ magnétique 40 peut comprendre une bobine d'induction, et optionnellement un noyau ferromagnétique à l'intérieur de la bobine. Ceci augmente le champ magnétique communiqué aux leviers 36. Lorsque la source de champ magnétique 40 est alimentée électriquement, elle produit un champ qui attire les deux leviers 36 en faisant tourner les aubes orientables 26 dans le même sens.

Afin d'améliorer ce phénomène, chaque levier 36 peut comprendre un matériau magnétique. Il peut comprendre un aimant permanent, une terre rare, un matériau ferromagnétique, de l'acier, et/ou un matériau organique. Ce matériau peut former intégralement chaque levier 36, ou essentiellement les surépaisseurs 50.

Il peut être opportun d'orientation les aubes orientables 26 selon leur première position au décollage d'un aéronef grâce à l'alimentation des sources 40, puis de couper leur alimentation en vol de croisière ; ce qui optimise la consommation générale du turboréacteur.

Dans le présent mode de réalisation, la source 40 permet de commander deux aubes orientables 26. Pour ce faire, la source 40 est placée au niveau axialement d'une rangée d'aubes rotoriques 24, ce qui permet de réaliser un montage compact radialement.

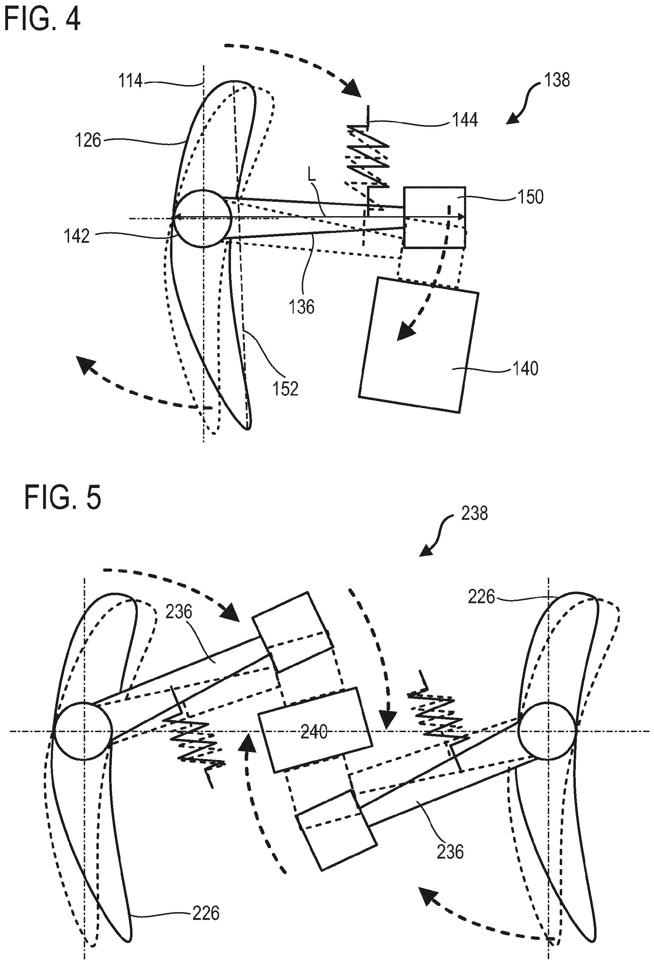

La figure 4 représente le système de commande 138 selon un deuxième mode de réalisation de l'invention. Cette figure 4 reprend la numérotation des figures précédentes pour les éléments identiques ou similaires, la numération étant toutefois incrémentée de 100. Des numéros spécifiques sont ajoutés pour ce mode de réalisation.

Le système de commande 138 du deuxième mode de réalisation est sensiblement identique au premier mode de réalisation, il en diffère toutefois en ce que chaque aube orientable 126 est munie d'une source de champ magnétique 140 dédiée, et ce pour chacune des aubes de la rangée correspondante. Cela permet de commander chaque aube orientable 126 de manière indépendante. Le système 138 comporte une aube orientable 126 avec un levier 136 transversal à sa corde 152. Le levier 136 peut être perpendiculaire à la corde 152.

La longueur L du levier 136 peut représenter la majorité de la longueur de la corde 152. La longueur L du levier 136 peut être mesurée depuis l'extrémité de la surépaisseur 150 jusqu'à l'extrémité opposée de la tige 134. La source 140 peut être placée axialement au niveau de l'aube orientable 126 associée. L'élément élastique 144 est généralement parallèle à l'axe de rotation 114.

La figure 5 représente le système de commande 238 selon un troisième mode de réalisation de l'invention. Cette figure 5 reprend la numérotation des figures précédentes pour les éléments identiques ou similaires, la numération étant toutefois incrémentée de 200.

Le système de commande 238 du troisième mode de réalisation est sensiblement identique au premier mode de réalisation. Néanmoins, il en diffère en ce que la source alimente deux aubes orientables 226 de la même rangée annulaire d'aubes. Les deux aubes orientables 226 reçoivent entre elles une source de champ magnétique 240 commune. Cette source 240 est placée axialement au niveau desdites aubes orientables 226. Les leviers 236 s'étendent de manière transversale par rapport aux cordes des aubes orientables 226. Les leviers 236 s'étendent vers l'autre aube 226 orientable de leur paire.

La présente configuration offre une compacité axiale. Elle permet de dégager de l'espace au niveau des aubes rotoriques. La présence de brides annulaires de fixation n'est pas entravée. La mutualisation d'une même source de champ magnétique permet de réduire le nombre total des sources, et d'en simplifier la commande.

Suivant une alternative de l'invention, une source peut piloter quatre aubes orientables, par exemple deux aubes d'une première rangée, et deux aubes d'une deuxième rangée. Ces aubes décrivent un quadrilatère dont le centre reçoit la source. Cette alternative peut être réalisée en combinant le premier mode de réalisation en figure 3 avec le troisième mode de réalisation en figure 5. L'homme du métier est encouragé à mutualiser davantage chaque source de champ magnétique.

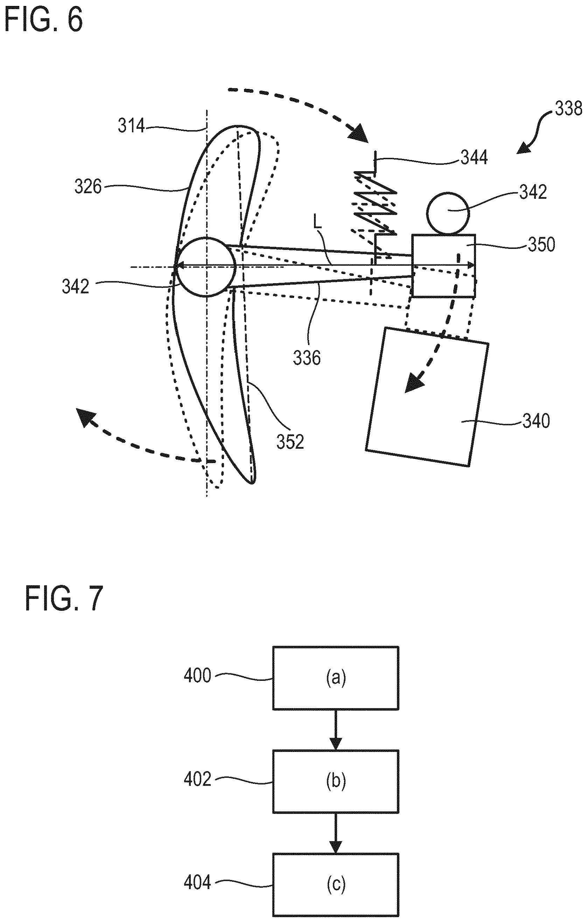

La figure 6 représente le système de commande 338 selon un quatrième mode de réalisation de l'invention. Cette figure 6 reprend la numérotation des figures précédentes pour les éléments identiques ou similaires, la numérotation étant toutefois incrémentée de 300.

Le système de commande 338 du quatrième mode de réalisation de l'invention est similaire à celui du deuxième mode de réalisation. Néanmoins, il s'en distingue en ce qu'une butée 342 est ajoutée au système de commande 338. Cette butée 342 pourrait coopérer avec le levier 336, notamment avec la surépaisseur 350. Eventuellement, la butée est un aimant permanent. Lorsque le levier 336 et/ou la surépaisseur 350 comprennent un matériau ferromagnétique, cet aimait maintient l'aube 326 dans sa première position. Lorsque la source 340 est alimentée, elle surmonte la force de maintien de l'aimant et attire l'aube 326 dans sa deuxième position.

Le système de commande 338 du quatrième mode de réalisation est sensiblement similaire au premier mode de réalisation, il en diffère toutefois en ce que chaque aube orientable 326 est munie d'une source de champ magnétique 340 dédiée, et ce pour chacune des aubes de la rangée correspondante. Cela permet de commander chaque aube orientable 326 de manière indépendante. Le système 338 comporte une aube orientable 326 avec un levier 336 transversal à sa corde 352. Le levier 336 peut être perpendiculaire à la corde 352.

La longueur L du levier 336 peut représenter la majorité de la longueur de la corde 352. La longueur L du levier 336 peut être mesurée depuis l'extrémité de la surépaisseur 350 jusqu'à l'extrémité opposée de la tige 334. La source 340 peut être placée axialement au niveau de l'aube orientable 326 associée. L'élément élastique 344 est généralement parallèle à l'axe de rotation 314.

De manière générale, un aimant permanent, formant éventuellement une butée, peut être prévu pour chaque aube selon chacun des modes de réalisation de l'invention. Eventuellement, un même aimant peut servir de butée pour deux aubes voisines. Chaque ressort peut être remplacé par un aimant. Chaque ressort peut être configuré pour travailler en compression ou en traction.

La figure 7 est un diagramme du procédé de contrôle d'une turbomachine munie d'un système de commande selon un quelconque mode de réalisation de l'invention. La turbomachine est avantageusement un turboréacteur propulsant un aéronef.

Le procédé peut comprendre les étapes suivantes :
(a) stationnement 400 au sol de l'aéronef, et
(b) décollage 402 de l'aéronef, où le système de commande alimente électriquement la ou chaque source de champ magnétique, de manière à entrainer en rotation au moins un ou chaque levier de commande associé à la ou aux sources de champ magnétiques correspondante, et optionnellement
(c) vol de croisière 404, où le système de commande coupe l'alimentation électrique de la ou chaque source de champ magnétique.

A l'étape (a) stationnement 400, le turbopropulseur peut être en fonctionnement ou à l'arrêt. Les leviers et les aubes peuvent être dans la première position, ou première orientation.

A l'étape (b) décollage 402, l'aéronef peut garder le contact avec le sol, puis s'en éloigner. Les leviers et les aubes peuvent être dans la deuxième position, ou deuxième orientation.

A l'étape (c) vol de croisière 404, les leviers et leurs aubes se déplacent par rapport à leurs configurations occupées à l'étape (b) décollage 402. Les leviers et les aubes peuvent regagner la première position.

## Revendications

1. Système de commande (38 ; 138 ; 238 ; 338) d'aube à orientation variable (26 ; 126 ; 226 ; 326) de turbomachine, le système de commande (38 ; 138 ; 238 ; 338) comprenant :
- un support ;
- une aube (26 ; 126 ; 226 ; 326) qui est mobile en rotation par rapport au support et qui comprend un levier de commande (36 ; 136 ; 236 ; 336) de l'orientation de l'aube (26 ; 126 ; 226 ; 326);
un actionneur avec une source de champ magnétique (40 ; 140 ; 240 ; 340) qui définit un entrefer (46) avec le levier de commande (36 ; 136 ; 236 ; 336) de sorte à pouvoir entraîner en rotation ledit levier de commande (36 ; 136 ; 236 ; 336) ;
**caractérisé en ce qu'**il comprend en outre un élément élastique (44 ; 144 ; 344) configuré pour écarter le levier (36 ; 136 ; 236 ; 336) de la source de champ magnétique (40 ; 140 ; 240 ; 340).

2. Système de commande (38; 138; 238; 338) selon la revendication 1, **caractérisé en ce que** le levier (36 ; 136 ; 236 ; 336) comprend une portion en matériau ferromagnétique coopérant avec la source de champ magnétique (40 ; 140 ; 240 ; 340).

3. Système de commande (38 ; 138 ; 238 ; 338) selon l'une des revendications 1 à 2, **caractérisé en ce que** le levier (36 ; 136 ; 236 ; 336) comprend une surépaisseur (50; 150; 350) coopérant avec la source de champ magnétique (40 ; 140 ; 240 ; 340).

4. Système de commande (38 ; 138 ; 238 ; 338) selon l'une des revendications 1 à 3, **caractérisé en ce que** la source de champ magnétique (40 ; 140 ; 240 ; 340) est disposée dans le plan de rotation du levier (36 ; 136 ; 236 ; 336).

5. Système de commande (338) selon l'une des revendications 1 à 4, **caractérisé en ce qu'**il comprend un aimant permanent configuré pour écarter le levier (336) de la source de champ magnétique (340) ; ledit aimant permanent formant éventuellement une butée (342).

6. Système de commande (38 ; 138 ; 238 ; 338) selon l'une des revendications 1 à 5, **caractérisé en ce qu'**il est adapté pour alimenter électriquement la source de champ magnétique de manière à déplacer progressivement le levier (36 ; 136 ; 236 ; 336), notamment en s'opposant à l'effort exercé par l'élément élastique.

7. Système de commande (38 ; 138 ; 238 ; 338) selon l'une des revendications 1 à 6, **caractérisé en ce que** le support comprend une butée (42), l'aube (26 ; 126 ; 226 ; 326) étant mobile en rotation entre une première position contre la butée, et une deuxième position contre la source de champ magnétique (40 ; 140 ; 240 ; 340), l'entrefer (46) étant éventuellement fermé lorsque l'aube (26 ; 126 ; 226 ; 326) est dans la deuxième position.

8. Système de commande (38 ; 138 ; 238 ; 338) selon l'une des revendications 1 à 7, **caractérisé en ce que** l'aube est une première aube (26 ; 126 ; 226 ; 326), le levier (36 ; 136 ; 236 ; 336) est un premier levier, l'entrefer (46) est un premier entrefer (46) ; le système de commande comprenant en outre une deuxième aube (26; 126; 226; 326) qui est mobile en rotation par rapport au support et qui comprend un deuxième levier de commande de l'orientation de la deuxième aube ; la source de champ magnétique définissant un deuxième entrefer (46) avec le deuxième levier de sorte à entraîner en rotation ledit deuxième levier.

9. Système de commande (38 ; 238) selon la revendication 8, **caractérisé en ce que** la première aube (26 ; 226) comprend un premier axe de rotation, la deuxième aube comprend un deuxième axe de rotation, la source de champ magnétique (40 ; 240) étant disposée dans un plan généré par lesdits axes de rotation.

10. Système de commande (38 ; 238) selon l'une des revendications 8 à 9, **caractérisé en ce qu'**il comprend au moins une rangée annulaire d'aubes à orientation variable (26 ; 226); la première aube et la deuxième aube appartenant à ladite rangée annulaire.

11. Système de commande (238) selon l'une des revendications 8 à 10, **caractérisé en ce qu'**il comprend au moins deux rangées annulaires d'aubes à orientation variable (226); la première aube (226) appartenant à l'une des deux rangées annulaires d'aubes et la deuxième aube appartenant à l'autre des deux rangées annulaires d'aubes.

12. Système de commande (38 ; 238) selon l'une des revendications 8 à 11, **caractérisé en ce que** la source de champ magnétique (40 ; 240) est disposée axialement et/ou circonférentiellement entre la première aube (26 ; 226) et la deuxième aube.

13. Turbomachine (2) comprenant un système de commande (38 ; 138 ; 238 ; 338) d'aube à orientation variable (26 ; 126 ; 226 ; 326), **caractérisée en ce que** le système de commande (38 ; 138 ; 238 ; 338) est conforme à l'une des revendications 1 à 12, préférentiellement la turbomachine comprend un compresseur basse pression (4) dans lequel est installé ledit système de commande (38 ; 138 ; 238 ; 338).

14. Turbomachine (2) selon la revendication 13, **caractérisée en ce que** qu'elle comprend un rotor (14) avec au moins une rangée annulaire d'aubes rotoriques (24) disposée axialement au niveau de la ou d'au moins une source de champ magnétique (40).

15. Procédé de contrôle d'une turbomachine (2), **caractérisé en ce que** la turbomachine est conforme à l'une des revendications 13 à 14, et **en ce qu'**elle est un turboréacteur ou un turbopropulseur d'aéronef, le procédé comprenant une étape (a) stationnement (400) au sol de l'aéronef, et une étape (b) décollage (402) de l'aéronef ; le système de commande (38 ; 138 ; 238 ; 338) étant configuré de sorte à alimenter électriquement la ou chaque source de champ magnétique (40 ; 140 ; 240 ; 340) lors de l'étape (b) décollage (402) de l'aéronef.

## Patentansprüche

1. Steuersystem (38; 138; 238; 338) für eine variabel ausrichtbare Leitschaufel (26; 126; 226; 326) einer Turbomaschine, wobei das Steuersystem (38; 138; 238; 338) umfasst:
- eine Halterung;
- eine Leitschaufel (26; 126; 226; 326), die bezüglich der Halterung in Rotation bewegbar ist und die einen Steuerhebel (36; 136; 236; 336) zur Ausrichtung der Leitschaufel (26; 126; 226; 326) umfasst;
einen Aktuator mit einer Magnetfeldquelle (40; 140; 240; 340), der einen Luftspalt (46) mit dem Steuerhebel (36; 136; 236; 336) definiert, um den Steuerhebel (36; 136; 236; 336) in Rotation versetzen zu können;
**dadurch gekennzeichnet, dass** es zudem umfasst:
ein elastisches Element (44; 144; 344), das dafür ausgelegt ist, den Hebel (36; 136; 236; 336) von der Magnetfeldquelle (40; 140; 240; 340) weg zu bewegen.

2. Steuersystem (38; 138; 238; 338) nach Anspruch 1, **dadurch gekennzeichnet, dass** der Hebel (36; 136; 236; 336) einen Abschnitt aus ferromagnetischem Material umfasst, der mit der Magnetfeldquelle (40; 140; 240; 340) zusammenwirkt.

3. Steuersystem (38; 138; 238; 338) nach einem der Ansprüche 1 bis 2, **dadurch gekennzeichnet, dass** der Hebel (36; 136; 236; 336) eine Verdickung (50; 150; 350) umfasst, die mit der Magnetfeldquelle (40; 140; 240; 340) zusammenwirkt.

4. Steuersystem (38; 138; 238; 338) nach einem der Ansprüche 1 bis 3, **dadurch gekennzeichnet, dass** die Magnetfeldquelle (40; 140; 240; 340) in der Rotationsebene des Hebels (36; 136; 236; 336) angeordnet ist.

5. Steuersystem (338) nach einem der Ansprüche 1 bis 4, **dadurch gekennzeichnet, dass** es einen Permanentmagneten umfasst, der dafür ausgelegt ist, den Hebel (336) von der Magnetfeldquelle (340) weg zu bewegen, wobei der Permanentmagnet einen Anschlag (342) bilden kann.

6. Steuersystem (38; 138; 238; 338) nach einem der Ansprüche 1 bis 5, **dadurch gekennzeichnet, dass** es dafür ausgelegt ist, der Magnetfeldquelle elektrische Energie zuzuführen, um den Hebel (36; 136; 236; 336) progressiv zu bewegen, spezieller so, dass der von dem elastischen Element ausgeübten Kraft entgegengewirkt wird.

7. Steuersystem (38; 138; 238; 338) nach einem der Ansprüche 1 bis 6, **dadurch gekennzeichnet, dass** die Halterung einen Anschlag (42) umfasst, wobei die Leitschaufel (26; 126; 226; 326) in Rotation zwischen einer ersten Position gegen den Anschlag und einer zweiten Position gegen die Magnetfeldquelle (40; 140; 240; 340) bewegbar ist, wobei der Luftspalt (46) geschlossen sein kann, wenn sich die Leitschaufel (26; 126; 226; 326) in der zweiten Position befindet.

8. Steuersystem (38; 138; 238; 338) nach einem der Ansprüche 1 bis 7, **dadurch gekennzeichnet, dass** die Leitschaufel eine erste Leitschaufel (26; 126; 226; 326) ist, der Hebel (36; 136; 236; 336) ein erster Hebel ist, der Luftspalt (46) ein erster Luftspalt (46) ist; wobei das Steuersystem zudem eine zweite Leitschaufel (26; 126; 226; 326) umfasst, die bezüglich der Halterung in Rotation bewegbar ist und die einen zweiten Steuerhebel zur Ausrichtung der zweiten Leitschaufel aufweist; wobei die Magnetfeldquelle einen zweiten Luftspalt (46) mit dem zweiten Hebel definiert, um den zweiten Hebel in Rotation zu versetzen.

9. Steuersystem (38; 238) nach Anspruch 8, **dadurch gekennzeichnet, dass** die erste Leitschaufel (26; 226) eine erste Rotationsachse umfasst, die zweite Leitschaufel eine zweite Rotationsachse umfasst, wobei die Magnetfeldquelle (40; 240) in einer durch diese Rotationsachsen erzeugten Ebene angeordnet ist.

10. Steuersystem (38; 238) nach einem der Ansprüche 8 bis 9, **dadurch gekennzeichnet, dass** es mindestens eine ringförmige Reihe von variabel ausrichtbaren Leitschaufeln (26; 226) umfasst; wobei die erste Leitschaufel und die zweite Leitschaufel zu dieser ringförmigen Reihe gehören.

11. Steuersystem (238) nach einem der Ansprüche 8 bis 10, **dadurch gekennzeichnet, dass** es mindestens zwei ringförmige Reihen von variabel ausrichtbaren Leitschaufeln (226) umfasst; wobei die erste Leitschaufel (226) zur einen der zwei ringförmigen Reihen von Leitschaufeln gehört und die zweite Leitschaufel zu der anderen der zwei ringförmigen Reihen von Leitschaufeln gehört.

12. Steuersystem (38; 238) nach einem der Ansprüche 8 bis 11, **dadurch gekennzeichnet, dass** die Magnetfeldquelle (40; 240) axial und/oder in Umfangsrichtung zwischen der ersten Leitschaufel (26; 226) und der zweiten Leitschaufel angeordnet ist.

13. Turbomaschine (2), umfassend ein Steuersystem (38; 138; 238; 338) für eine variabel ausrichtbare Leitschaufel (26; 126; 226; 326), **dadurch gekennzeichnet, dass** das Steuersystem (38; 138; 238; 338) einem der Ansprüche 1 bis 12 entspricht; bevorzugt umfasst die Turbomaschine einen Niederdruckverdichter (4), worin das Steuersystem (38; 138; 238; 338) installiert ist.

14. Turbomaschine (2) nach Anspruch 13, **dadurch gekennzeichnet, dass** sie einen Rotor (14) mit mindestens einer ringförmigen Reihe von Rotorleitschaufeln (24) umfasst, die axial an der axialen Position der, oder mindestens einer der, Magnetfeldquellen (40) angeordnet ist.

15. Verfahren zur Steuerung einer Turbomaschine (2), **dadurch gekennzeichnet, dass** die Turbomaschine einem der Ansprüche 13 oder 14 entspricht, und dass es ein Turbomotor oder ein Turboproptriebwerk eines Luftfahrzeugs ist, wobei das Verfahren einen Schritt (a) des Parkens (400) des Luftfahrzeugs am Boden und einen Schritt (b) des Abhebens (402) umfasst; wobei das Steuersystem (38; 138; 238; 338) dafür ausgelegt ist, der oder jeder Magnetfeldquelle (40; 140; 240; 340) während des Schritts (b) des Abhebens elektrische Energie zuzuführen.

## Claims

1. Control system (38; 138; 238; 338) for a variable orientation vane (26; 126; 226; 326) of a turbomachine, the control system (38; 138; 238; 338) comprising:
- a support;
- a vane (26; 126; 226; 326) which is movable in rotation relative to the support and which comprises a lever (36; 136; 236; 336) for controlling the orientation of the vane (26; 126; 226; 326);
an actuator with a magnetic field source (40; 140; 240; 340) which defines an air gap (46) with the control lever (36; 136; 236; 336) so as to be able to drive said control lever (36; 136; 236; 336) in rotation;
**characterized in that** it comprises furthermore
an elastic element (44; 144; 344) configured to move the lever (36; 136; 236; 336) away from the magnetic field source (40; 140; 240; 340).

2. Control system (38; 138; 238; 338) according to one claim 1, **characterized in that** the lever (36; 136; 236; 336) comprises a portion made of ferromagnetic material cooperating with the magnetic field source (40; 140; 240; 340).

3. Control system (38; 138; 238; 338) according to any of claims 1 to 2, **characterized in that** the lever (36; 136; 236; 336) comprises an excess thickness (50; 150; 350) cooperating with the magnetic field source (40; 140; 240; 340).

4. Control system (38; 138; 238; 338) according to any of claims 1 to 3, **characterized in that** the magnetic field source (40; 140; 240; 340) is arranged in the plane of rotation of the lever (36; 136; 236; 336).

5. Control system (338) according to any of claims 1 to 4, **characterized in that** it comprises a permanent magnet configured to move the lever (336) away from the magnetic field source (340), wherein said permanent magnet may form a stop (342).

6. Control system (38; 138; 238; 338) according to any of claims 1 to 5, **characterized in that** it is adapted to feed electric power to the magnetic field source so as to move the lever (36; 136; 236; 336) progressively, in particular so as to oppose the force exerted by the elastic element.

7. Control system (38; 138; 238; 338) according to any of claims 1 to 6, **characterized in that** the support comprises a stop (42), the vane (26; 126; 226; 326) being movable in rotation between a first position against the stop and a second position against the magnetic field source (40; 140; 240; 340), wherein the air gap (46) may be closed when the vane (26; 126; 226; 326) is in the second position.

8. Control system (38; 138; 238; 338) according to any of claims 1 to 7, **characterized in that** the vane is a first vane (26; 126; 226; 326), the lever (36; 136; 236; 336) is a first lever, the air gap (46) is a first air gap (46); the control system comprising further a second vane (26; 126; 226; 326) which is movable in rotation relative to the support and which comprises a second lever for controlling the orientation of the second vane; the magnetic field source defining a second air gap (46) with the second lever so as to drive said second lever in rotation.

9. Control system (38; 238) according to claim 8, **characterized in that** the first vane (26; 226) comprises a first rotation axis, the second vane comprises a second rotation axis, the magnetic field source (40; 240) being arranged in a plane generated by said rotation axes.

10. Control system (38; 238) according to one of claims 8 to 9, **characterized in that** it comprises at least one annular row of variable orientation vanes (26; 226); the first vane and the second vane belonging to said annular row.

11. Control system (238) according to any of claims 8 to 10, **characterized in that** it comprises at least two annular rows of variable orientation vanes (226); the first vane (226) belonging to one of the two annular rows of vanes, and the second vane belonging to the other of the two annular rows of vanes.

12. Control system (38; 238) according to any of claims 8 to 11, **characterized in that** the magnetic field source (40; 240) is arranged axially and/or circumferentially between the first vane (26; 226) and the second vane.

13. Turbomachine (2) comprising a control system (38; 138; 238; 338) for a variable orientation vane (26; 126; 226; 326), **characterized in that** the control system (38; 138; 238; 338) is in accordance with any of claims 1 to 12, preferably the turbomachine comprises a low-pressure compressor (4) in which said control system (38; 138; 238; 338) is installed.

14. Turbomachine (2) according to claim 13, **characterized in that** it comprises a rotor (14) with at least one annular row of rotor vanes (24) arranged axially at the axial position of the, or of at least one of, the magnetic field sources (40).

15. Method for controlling a turbomachine (2), **characterized in that** the turbomachine is according to one of claims 13 or 14, and **in that** it is a turbine engine or a turbo prop of an aircraft, the method comprising a step (a) of parking (400) the aircraft on the ground, and a step (b) of taking off (402); the system for controlling (38; 138; 238; 338) being configured so as to feed with electric power the or each of the magnetic field source(s) (40; 140; 240; 340) during step (b) taking off.
